# EUROPEAN PATENT APPLICATION

(11) **EP 2 853 754 A1**
(43) Date of publication of application: **01.04.2015**
(21) Application number: 14181544.9
(22) Date of filing: 20.08.2014
(51) Int. Cl.: F15B 21/04, F15B 15/14

(54) **A hydraulic actuator arrangement**

(30) Priority: 21.08.2013 GB 201314933
(71) Applicant: Airbus Operations Limited, Bristol BS34 7PA (GB)
(72) Inventor: Bracey, Anthony, BRISTOL, Bristol BS99 7AR (GB)
(74) Representative: Teesdale, Emily Catherine

(57) **Abstract**

The present invention provides a hydraulic actuator arrangement 100 comprising a hydraulic actuator 110, a hydraulic fluid supply line 120 connected to the actuator for supplying hydraulic fluid to the actuator, and a bleed port 124 for enabling air in the hydraulic actuator arrangement to be bled out, wherein the hydraulic actuator arrangement further comprises a bleed line 130 connected to the bleed port to enable any hydraulic fluid bled through the bleed port to be conveyed along the bleed line.

## Description

### Background of the Invention

The present invention concerns a hydraulic actuator arrangement. More particularly, but not exclusively, this invention concerns a hydraulic actuator arrangement comprising a hydraulic actuator, a hydraulic fluid supply line connected to the actuator for supplying hydraulic fluid to the actuator, and a bleed port for enabling air in the hydraulic actuator arrangement to be bled out. The invention also concerns a hydraulic test rig for testing aircraft components, an aircraft and a method of bleeding a hydraulic actuator arrangement.

A known aircraft structural test facility uses test rigs to mount parts of aircraft structures and apply different loads (in different locations) to the structures using hydraulic actuators. The hydraulic actuators are typically supplied with high pressure hydraulic oil from a hydraulic oil supply known as a "ring-main", which is used to supply the various different actuators of the different test rigs in the facility. The "ring-main" comprises a pressure line (for supplying oil) and a return line. These lines generally run side-by-side around the test facility building.

However, air often enters the system, especially as joints in the "ring-main" are dismantled periodically to add new test rigs or replace leaking seals. This causes the rigs to become less reliable and less able to apply loads accurately. This is especially a problem with multi-actuator test rigs due to the interaction between the different loading locations. Air in the system causes the rigs to malfunction, rig shutdown and loss of running time of the test rigs.

There are two ways in which air can be removed from the system. They both comprise having bleed ports at high points on the test rigs to let air (and oil) out. Firstly, a "break joint" can be used to run off a quantity of the hydraulic oil into a container. However, this is time consuming (as the pressure on the test rig has to be reduced from a working pressure of approximately 3,000 to 5,000 psi to below approximately 500 psi before the joint is broken) and wastes the oil (as the oil collected in the container has to be re-filtered before returning to the "ring-main"). Secondly, bleed nipples (screw threaded bleed ports) have been used but this is rather messy and, in some cases, needs bleeding to be carried out several times a day. It also suffers from the problem of oil wastage.

The present invention seeks to mitigate the above-mentioned problems. Alternatively or additionally, the present invention seeks to provide an improved hydraulic actuator arrangement and method of bleeding a hydraulic actuator arrangement.

### Summary of the Invention

The present invention provides, according to a first aspect, a hydraulic actuator arrangement comprising a hydraulic actuator, a hydraulic fluid supply line connected to the actuator for supplying hydraulic fluid to the actuator, and a bleed port for enabling air in the hydraulic actuator arrangement to be bled out, wherein the hydraulic actuator arrangement further comprises a bleed line connected to the bleed port to enable any hydraulic fluid bled through the bleed port to be conveyed along the bleed line.

Having a bleed line connected to the bleed port allows the bled hydraulic fluid to conveyed to a location away from the actuator, for example an oil reservoir, preferably located in a hydraulic pump room. This allows the hydraulic fluid to be re-used more easily. It also allows the bleed port to be open without causing wastage of hydraulic oil or causing a mess.

The hydraulic fluid may be water, oil or any other suitable fluid for use in a hydraulic actuator arrangement. The invention is applicable to any hydraulic actuator arrangement, and not limited in application to a test rig.

Preferably, the hydraulic fluid supply line is connected directly to the actuator.

Preferably, the bleed line is arranged to convey bled hydraulic fluid to a hydraulic fluid return line. This allows the bled hydraulic fluid to be conveyed to a source of hydraulic fluid so that it can be re-used. As the hydraulic fluid is not taken out of a closed arrangement (for example, it is not collected in a separate container), it does not have to be re-filtered before being re-used.

More preferably, the hydraulic fluid return line is arranged to return bled hydraulic fluid to the hydraulic fluid supply line. In other words, the bled hydraulic fluid is returned to the same supply of hydraulic fluid that supplies the actuator. This hydraulic fluid supply may supply a number of other actuators as well.

Preferably, the bleed line comprises a bleed pipe and a valve assembly.

More preferably, the valve assembly comprises a valve for controlling the flow of bled hydraulic fluid from the bleed pipe to an outlet of the valve assembly. This allows the bleed pipe to be used to retain bled hydraulic fluid when the valve is closed and to output bled hydraulic fluid to a suitable location/receptacle/line when the valve is open. For example, if the outlet of the valve assembly is connected to a suitable line or is such that fluid will run from the valve assembly outlet into a suitable receptacle, the valve may be open. The valve can then be closed if the receptacle/valve assembly outlet is to be moved or the line is to be disconnected.

More preferably, the outlet of the valve assembly comprises a return line connector portion for connecting to the hydraulic fluid return line, the return line connector portion preferably comprising one half of a quick release connection and wherein a corresponding connector portion on the hydraulic fluid return line comprises another half of the quick release connection. The quick release connection allows the bleed line to be easily connected to and disconnected from the hydraulic fluid return line, with minimal mess and no need to shut down the arrangement (e.g. disrupt tests if the arrangement is part of a test rig).

More preferably, the hydraulic fluid return line connector portion comprises a male half of a quick release connection and wherein the connector portion on the hydraulic fluid return line comprises a female half of the quick release connection.

Preferably, the valve is a throttle valve. This allows the flow of bled hydraulic fluid to be accurately controlled so as to sufficiently discharge bled hydraulic fluid whilst not over-filling or over-pressurising the line/receptacle etc. where the bled fluid is output to.

The throttle valve may be an electrically operated throttle valve. This valve could be operated remotely, which would be especially helpful if the valve was in an inaccessible or difficult to reach location. The valve could also be operated by a timer to open the valve at predetermined time intervals.

Alternatively, the throttle valve may be a manually operated valve, such as a rotatable valve.

Preferably, the bleed line comprises a flexible pipe, preferably a high-pressure hose pipe. The high pressure hose pipe may be capable of taking a working pressure that greatly exceeds the working pressure of the hydraulic actuator arrangement. For example, the high pressure hose pipe may be capable of taking a working pressure of approximately 10,000 psi (which is three times the working pressure of a typical hydraulic actuator test rig).

Preferably, the bleed port is located on the hydraulic fluid supply line. This allows the hydraulic fluid supply line to provide its own bleed port, negating the need for any additional ports on the actuator or in the rest of the hydraulic actuator arrangement.

More preferably, the hydraulic fluid supply line comprises a hydraulic fluid supply pipe and a connector assembly for connecting the hydraulic fluid supply pipe to the actuator, and preferably wherein the bleed port is located on the connector assembly. This allows the connector assembly of the hydraulic fluid supply line to provide its own bleed port, negating the need for any additional ports on the actuator or in the rest of the hydraulic actuator arrangement. It also allows the bleed port to be provided in a connector assembly, including a connection to a bleed line, thereby minimising the number of connector assemblies required.

Preferably, the connector assembly, at a first end, comprises an actuator connector portion for connecting to the actuator, the actuator connector portion comprising one half of a quick release connection and wherein a corresponding connector portion on the actuator comprises another half of the quick release connection. The quick release connection allows the hydraulic fluid supply line to be easily connected to and disconnected from the actuator, with minimal mess.

More preferably, the actuator connector portion comprises a male half of a quick release connection and wherein the connector portion on the actuator comprises a female half of the quick release connection.

Preferably, the connector assembly comprises, at a second end, a hydraulic fluid supply pipe connector portion for connecting to the hydraulic fluid supply pipe, the hydraulic fluid supply pipe connector portion comprising one half of a quick release connection and wherein a corresponding connector portion on the hydraulic fluid supply pipe comprises another half of the quick release connection. The quick release connection allows the connector assembly to be easily connected to and disconnected from the hydraulic fluid supply pipe, with minimal mess.

More preferably, the hydraulic fluid supply pipe connector portion comprises a female half of a quick release connection and wherein the connector portion on the hydraulic fluid supply pipe comprises a male half of the quick release connection.

More preferably, the actuator connector portion and hydraulic fluid supply pipe connector portion of the connector assembly comprise one female half and one male half of a quick release connector, such that the connector portion on the hydraulic fluid supply pipe can be directly connected to the connector portion on the actuator.

The present invention provides, according to a second aspect, a hydraulic actuator arrangement comprising a hydraulic actuator, a hydraulic fluid supply line connected to the actuator for supplying hydraulic fluid to the actuator, and a bleed port for enabling air in the hydraulic actuator arrangement to be bled out, wherein the bleed port is located on the hydraulic fluid supply line.

Having the bleed port located on the hydraulic fluid supply line allows the hydraulic fluid supply line to provide its own bleed port, negating the need for any additional ports on the actuator or in the rest of the hydraulic actuator arrangement.

Preferably, the hydraulic fluid supply line comprises a hydraulic fluid supply pipe and a connector assembly for connecting the hydraulic fluid supply pipe to the actuator, and wherein the bleed port is located on the connector assembly. This allows the connector assembly of the hydraulic fluid supply line to provide its own bleed port, negating the need for any additional ports on the actuator or in the rest of the hydraulic actuator arrangement. It also allows the bleed port to be provided in a connector assembly, for example, including a connection to a bleed line, thereby minimising the number of connector assemblies required.

More preferably, the connector assembly is a connector device.

Preferably, according to either aspect, the hydraulic actuator arrangement comprises more than one actuator and more than one bleed port, preferably comprising a plurality of actuators, each having a corresponding bleed port. For each actuator, the corresponding bleed port may be located only on one side of a piston of the actuator.

The present invention also provides, according to a third aspect, a hydraulic test rig for testing aircraft components, comprising the hydraulic actuator arrangement of either aspect, as described above.

The present invention also provides, according to a fourth aspect, an aircraft comprising the hydraulic actuator arrangement of any aspect, as described above.

The present invention also provides, according to a fifth aspect, a connector assembly for a hydraulic fluid supply line of a hydraulic actuator arrangement, wherein the connector assembly is for connecting the hydraulic fluid supply pipe to an actuator, and, preferably, wherein a bleed port is located on the connector assembly.

Preferably, the connector assembly, at a first end, comprises an actuator connector portion for connecting to the actuator, the actuator connector portion comprising one half of a quick release connection.

Preferably, the connector assembly comprises, at a second end, a hydraulic fluid supply pipe connector portion for connecting to the hydraulic fluid supply pipe, the hydraulic fluid supply pipe connector portion comprising one half of a quick release connection.

Preferably, the actuator connector portion and hydraulic fluid supply pipe connector portion of the connector assembly comprise one female half and one male half of a quick release connector, such that a connector portion on the hydraulic fluid supply pipe can be directly connected to a connector portion on the actuator.

The present invention also provides a method of bleeding a hydraulic actuator arrangement comprising the step of providing a hydraulic actuator arrangement, test rig, aircraft or connector assembly of any aspect, as described above.

The present invention provides, according to a third aspect, a method of bleeding a hydraulic actuator arrangement comprising the steps of providing an actuator, providing a hydraulic fluid supply line connected to the actuator for supplying hydraulic fluid to the actuator, providing a bleed port for enabling air in the hydraulic actuator arrangement to be bled out, providing a bleed line connected to the bleed port, bleeding hydraulic fluid through the bleed port, and conveying the bled hydraulic fluid along the bleed line.

The present invention provides, according to a fourth aspect, a method of bleeding a hydraulic actuator arrangement comprising the steps of providing an actuator, providing a hydraulic fluid supply line connected to the actuator for supplying hydraulic fluid to the actuator, providing a bleed port for enabling air in the hydraulic actuator arrangement to be bled out, providing a bleed line connected to the bleed port, and bleeding hydraulic fluid through the bleed port, wherein the bleed port is located on the hydraulic fluid supply line.

It will of course be appreciated that features described in relation to one aspect of the present invention may be incorporated into other aspects of the present invention. For example, the method of either aspect of the invention may incorporate any of the features described with reference to the apparatus of either aspect of the invention and *vice versa.*

### Description of the Drawings

An embodiment of the present invention will now be described by way of example only with reference to the accompanying schematic drawing of which:

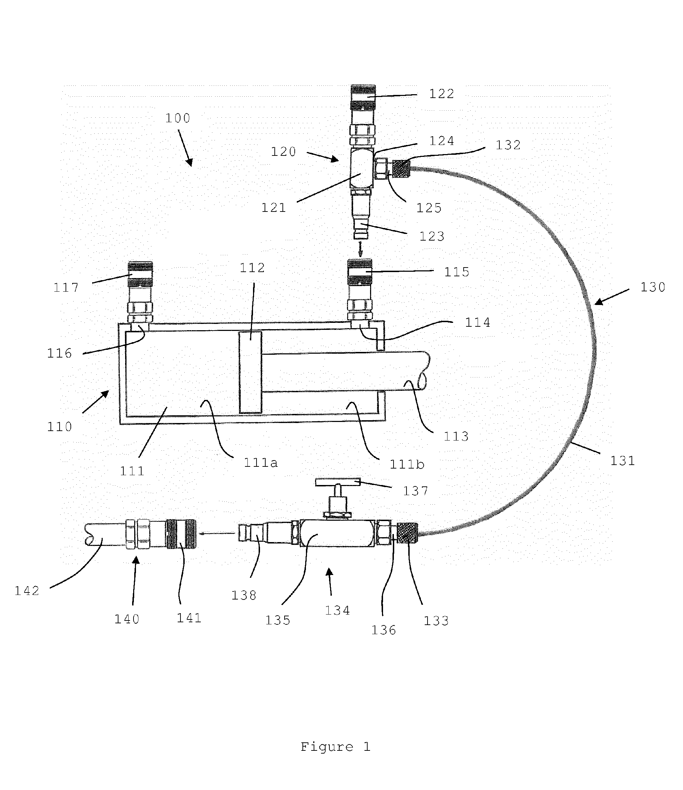

Figure 1 shows a schematic view of part of a test rig according to a first embodiment of the invention.

### Detailed Description

Figure 1 shows part of a hydraulic test rig 100 according to a first embodiment of the invention. The test rig 100 comprises many hydraulic actuators, one of which (actuator 110) is shown in Figure 1. Connected to the actuator 110 is a high pressure (HP) oil supply line connector 120, which connects to a HP supply pipe (not shown) that supplies HP oil from an oil supply, and a first end of a bleed line 130. The other end of the bleed line 130 is connected to a low pressure oil return line 140, which leads to the oil supply (not shown). These will now be described in more detail.

The actuator 110 comprises a cylindrical main chamber 111 with a piston 112 across the width of the chamber 111. Hence, the piston 112 divides the chamber into a left hand side 111a to the left (front) of the piston 112 and a right hand side 111b to the right (back) of the piston 112. A piston rod 113 is attached to the back of the piston 112 in the centre and extends from the back of the piston, through the right hand side 111b of the chamber and then through a back chamber wall so that it extends externally of the chamber 111. The piston 112 and piston rod 113 can move (as a unit) left and right within the chamber 111. This movement is caused by the presence of high pressure oil in the chamber 111. The movement enables the piston rod 113 to be used to impart a required force on an aircraft component (not shown) in the test rig 100.

The chamber 111 also has a first connection port 114 on the right hand side 111b of the chamber 111. This connection port 114 has a first female quick release connector 115 connected to it. There is also a second connection port 116 on the left hand side 111a of the chamber 111. This connection port 116 has a second female quick release connector 117 connected to it.

The HP supply line connector 120 comprises a main bore 121 for supplying HP oil, with a female quick release connector 122 at a first end and a male quick release connector 123 at a second end. A male quick release connector (not shown) of the HP supply pipe (not shown) is connected to the female quick release connector 122 of the HP supply line connector. The male quick release connector 123 of the HP supply line connector is connected to the first female quick release connector 115 of the actuator 110.

The HP supply line connector 120 also comprises a bleed port 124 off the main bore 121. There is also a screw connector 125 adjacent the bleed port for attaching the bleed line 130.

The bleed line 130 comprises a high pressure hose pipe 131 capable of taking a working pressure that greatly exceeds the working pressure of the HP oil supplied. For example, the high pressure hose pipe may be capable of taking a working pressure of approximately 10,000 psi. At a first end of the hose pipe 131 is a screw connector 132 for connecting with the bleed port screw connector 125 of the HP supply line connector 120. At a second end of the hose pipe 131 is a second screw connector 133 for attaching to a valve assembly 134.

The valve assembly 134 comprises a main bore 135 for allowing passage of bled oil, with a screw connector 136 at a first end and a male quick release connector 138 at a second end. The screw connector 136 of the valve assembly is for connecting with the second hose pipe screw connector 133. The male quick release connector 138 is for connecting to a low pressure oil return line 140.

The valve assembly 134 also comprises a rotatable throttle valve 137 on the main bore 135 of the valve assembly 134. This valve 137 allows the passage of oil through the valve assembly 134 to be controlled.

The low pressure oil return line 140 comprises an oil return pipe 142 which leads to the oil supply (not shown). At a first end of the oil return pipe 142 is a female quick release connector 141 for connecting with the male quick release connector 138 of the valve assembly 134.

It is noted that there are no moving parts in the high pressure oil supply line connector 120, in the bleed line 130 or in the low pressure oil return line 140 (except the throttle valve 137).

In use, test rig 100 is used in a way to prevent air build up in the test rig, as will be explained below:
The test rig 100 is set up with the male quick release connector 123 of the high pressure oil supply line connector 120 inserted into the female quick release connector 115 on the actuator 110. A male quick release connector of a high pressure oil supply pipe (not shown) is inserted into the female quick release connector 122 on the high pressure oil supply line connector 120. The male quick release connector 138 on the valve assembly 134 is inserted into the female quick release connector 141 on the low pressure oil return line 140. The oil return pipe 142 is fed back to a source of oil that supplies the high pressure oil supply pipe (not shown). The throttle valve 137 is open.

In use of the test rig 100, high pressure oil, at a working pressure of approximately 3,000 to 5,000 psi, from the high pressure oil supply pipe (not shown) is repeatedly forced into the actuator 110, into the second side 111b of the actuator chamber 111 so that the piston 112 and piston rod 113 move in the actuator chamber 111. This causes the rod 113 to move in and out of the chamber 111 and so be able to provide a repeated force to be applied to an aircraft component.

Any air that may build up in the test rig 100, and especially in the actuator 110 of the test rig 100, will be able to escape via the bleed port 124 into the bleed pipe 131, through the valve assembly 134 (as the throttle valve 137 is open), into the oil return pipe 142 and be returned to a source of oil that supplies the high pressure oil supply pipe (not shown).

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The hydraulic fluid used does not have to be oil. In fact, it could be water or any other suitable hydraulic fluid.

The test rig 100 could work at any suitable working pressure.

The test rig 100 may instead be used to bleed air only when it becomes apparent (for example, when problems arise). Hence, connector 138 on the valve assembly 134 of the bleed line 130 may be disconnected from connector 141 of the oil return line. Valve 137 of the valve assembly 134 would be closed. Then, when air becomes apparent, the connectors 138 and 141 are connected to connect the bleed line 130 with the low pressure oil return line 140 and valve 137 can be opened. To disconnect again, valve 137 is closed and then connectors 138 and 141 are disconnected.

Low pressure oil return line 140 could be used to return bled oil from a number of actuators of the test rig 100 at different times. For example, each of the actuators could have a similar connector 138 which can be connected to the connector 141 of the low pressure oil return line 140.

A further alternative is that oil return pipe 142 of the low pressure oil return line 140 may return the bled oil to an oil supply that is not the same oil supply that supplies the HP supply line pipe (not shown). Instead, the low pressure oil return line 140 may return the bled oil to an oil supply that supplies a different supply line.

Another alternative is that the bleed line 130 may be attached to the ring-main, rather than an actuator. In particular, the bleed devices could be attached at high points of the ring-main.

Another alternative is that the manually rotatable throttle valve 137 is replaced by a pre-set electrically operated throttle valve. This valve could be operated remotely, which would be especially helpful if the valve was in an inaccessible or difficult to reach location. The valve could also be operated by a timer to open the valve at predetermined time intervals.

The test rig 100 may be suitable for testing any component, not necessarily an aircraft component.

The invention also applies to any hydraulic actuator arrangement and not just a test rig, such as described here.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A hydraulic actuator arrangement comprising;
- a hydraulic actuator,
- a hydraulic fluid supply line connected to the actuator for supplying hydraulic fluid to the actuator, and
- a bleed port for enabling air in the hydraulic actuator arrangement to be bled out,
wherein the hydraulic actuator arrangement further comprises a bleed line connected to the bleed port to enable any hydraulic fluid bled through the bleed port to be conveyed along the bleed line.

2. A hydraulic actuator arrangement as claimed in claim 1, wherein the bleed line is arranged to convey bled hydraulic fluid to a hydraulic fluid return line and wherein the hydraulic fluid return line is arranged to return bled hydraulic fluid to the hydraulic fluid supply line.

3. A hydraulic actuator arrangement as claimed in claim 1 or claim 2, wherein the bleed line comprises a bleed pipe and a valve assembly.

4. A hydraulic actuator arrangement as claimed in claim 3, wherein the valve assembly comprises a valve for controlling the flow of bled hydraulic fluid from the bleed pipe to an outlet of the valve assembly.

5. A hydraulic actuator arrangement as claimed in claim 4 when dependent on claim 2, wherein the outlet of the valve assembly comprises a return line connector portion for connecting to the hydraulic fluid return line, the return line connector portion preferably comprising one half of a quick release connection and wherein a corresponding connector portion on the hydraulic fluid return line comprises another half of the quick release connection.

6. A hydraulic actuator arrangement as claimed in any preceding claim, wherein the bleed line comprises a flexible pipe, preferably a high-pressure hose pipe.

7. A hydraulic actuator arrangement as claimed in any preceding claim, wherein the bleed port is located on the hydraulic fluid supply line and wherein the hydraulic fluid supply line comprises a hydraulic fluid supply pipe and a connector assembly for connecting the hydraulic fluid supply pipe to the actuator, and, preferably, wherein the bleed port is located on the connector assembly.

8. A hydraulic actuator arrangement as claimed in claim 7, wherein the connector assembly, at a first end, comprises an actuator connector portion for connecting to the actuator, the actuator connector portion comprising one half of a quick release connection and wherein a corresponding connector portion on the actuator comprises another half of the quick release connection.

9. A hydraulic actuator arrangement as claimed in claim 7 or claim 8, wherein the connector assembly comprises, at a second end, a hydraulic fluid supply pipe connector portion for connecting to the hydraulic fluid supply pipe, the hydraulic fluid supply pipe connector portion comprising one half of a quick release connection and wherein a corresponding connector portion on the hydraulic fluid supply pipe comprises another half of the quick release connection.

10. A hydraulic actuator arrangement as claimed in claim 9 when dependent on claim 8, wherein the actuator connector portion and hydraulic fluid supply pipe connector portion of the connector assembly comprise one female half and one male half of a quick release connector, such that the connector portion on the hydraulic fluid supply pipe can be directly connected to the connector portion on the actuator.

11. A hydraulic actuator arrangement as claimed in any preceding claim, wherein the hydraulic actuator arrangement comprises more than one actuator and more than one bleed port, preferably comprising a plurality of actuators, each having a corresponding bleed port.

12. A hydraulic test rig for testing aircraft components, comprising the hydraulic actuator arrangement of any preceding claim.

13. An aircraft comprising the hydraulic actuator arrangement of any of claims 1 to 11.

14. A method of bleeding a hydraulic actuator arrangement comprising the step of providing a hydraulic actuator arrangement, test rig or aircraft of any preceding claim.

15. A method of bleeding a hydraulic actuator arrangement comprising the steps of:
- providing an actuator,
- providing a hydraulic fluid supply line connected to the actuator for supplying hydraulic fluid to the actuator,
- providing a bleed port for enabling air in the hydraulic actuator arrangement to be bled out,
- providing a bleed line connected to the bleed port,
- bleeding hydraulic fluid through the bleed port, and
- conveying the bled hydraulic fluid along the bleed line.
